# EUROPEAN PATENT SPECIFICATION

(11) **EP 2 266 303 B1**
(45) Date of publication and mention of the grant of the patent: **07.06.2017**
(21) Application number: 08735854.5
(22) Date of filing: 04.04.2008
(51) Int. Cl.: H04M 3/42, H04M 3/436

(54) **MANAGING COMMUNICATIONS**
KOMMUNIKATIONSVERWALTUNG
GESTION DE COMMUNICATIONS

(43) Date of publication of application: 29.12.2010
(73) Proprietor: Telefonaktiebolaget LM Ericsson (publ), 164 83 Stockholm (SE)
(72) Inventor: BOT, Johannes Jan, NL-4255 GV Nieuwendijk (NL)
(74) Representative: Ericsson
(86) International application number: PCT/EP2008/054116
(87) International publication number: WO 2009/121419

(56) References cited:
- WO-A-01/20939
- WO-A-98/56141
- US-A1- 2003 112 948
- US-A1- 2007 116 218

## Description

### TECHNICAL FIELD

The invention relates to the field of managing communications, and in particular to managing unwanted calls in a communications network.

### BACKGROUND

In a communications network, a calling party can call a receiving party and connect to the receiving party to set up a session. In some circumstances, the receiving party can block the call before the session is set up. This may be done, for example, by using a personal black/white list service in which the receiving party's terminal (such as a telephone) can decide whether or not to set up an incoming call by comparing the identity of the calling party with a list of barred identities stored in a database. For example, if a receiving party receives a malicious call, they can call a service number and order that the last calling party number, or identity, is stored in the database. Alternatively, the database can be populated in advance if the number of the malicious calling party is known.

EP1775922 discloses an example of a system for barring incoming calls in which the receiving terminal compares the number of the calling party with the contents of a database stored at the receiving terminal. If the calling party number matches a number in the database, then the receiving terminal can choose to bar the call.

US 2007/116218 discloses an example of a system where the called party can indicate for the current call whether it wants to add the calling party identifier to the database of calling identifiers that need to be blocked in future calls. Telephone users can receive unsolicited telephone advertisements and sales calls from telemarketers, and many users find this to be a nuisance. However, a problem arises because in order for the known methods of blocking telephone calls to be effective, the telephone number of a telemarketer must be known in advance. This is rarely the case, as telemarketers do not often repeat calls to the same user, or can call using different numbers, and so their number is unlikely to be on a database of numbers to bar.

One system to address this problem is to provide a voluntary code that telemarketers adhere to. A user who does not wish to receive telemarketing calls subscribes to a database, and if their number is on the database then the telemarketer will not call them. However, this requires self-policing by the telemarketers, and there is no guarantee that being registered with the database will prevent unscrupulous telemarketers from calling the user. A problem with existing systems is that there are no reliable mechanisms for preventing telemarketers from calling users who do not wish to receive calls

### SUMMARY

The invention provides a remote, centrally maintained database, which includes a list of barred numbers provisioned by a third party. This database is accessible by a user of a receiving terminal. On receiving an incoming call, a Service Control Function serving the receiving terminal checks the database and a comparison is made between the calling party number and the list of barred numbers. If a match is found then appropriate action is taken, which may include barring the call or routing it to another destination.

According to a first aspect of the invention, there is provided method of handling a request to set up a call between a calling party and a called party in a communication network. A Service Control Function node that serves the called party receives a request to set up a call, and the request includes information identifying the calling party. A comparison is made between the information identifying the calling party with identities of calling parties retrieved from a remote database, the identities having been provisioned by a third party. This allows a third party to provision information in the database that can be used for all subscribers to the call handling service. If the information identifying the calling party does not match with information retrieved from the remote database, then the call is set up between the called party and the calling party. On the other hand, if the information identifying the calling party matches information retrieved from the remote database, then further action is taken determined by call handling policies. The further action may optionally be either barring the call or diverting the call to, for example, a voice mailbox.

As an option, the remote database further comprises identities of calling parties associated with the called party. This allows the calling party to provision the database with calling party identities specific to that called party, and therefore introduces a degree of personalization in the call handling.

The Service Control Function node is optionally a switching node such as a Mobile Switching Centre and a Service Switching Point.

In some instances the called party will receive an unwanted call from a calling party who is not provisioned in the remote, centrally maintained database. The called party may wish to provision the calling party in the database, and so as an option the method further comprises, in the event that the call has been set up, receiving from the called party a request to provision the calling party identity in the database, and as a result of the request, provisioning the called party identity in the database. In order to prevent called parties from maliciously provisioning calling parties in the database, the calling party identity is optionally provisioned in the database after a predetermined number of different called parties have requested the calling party identity to be provisioned the database. Optionally, any person may check the database to see if they are incorrectly provisioned in the database and may apply to the operator of the database to have their entry in the database removed.

The method optionally further comprises receiving subscriber specific information from the database relating to the calling party identity, and determining whether to set up the call or take further action determined by call handling policies as a result of the subscriber specific information. An example of such information is allowing calls from a particular called party between certain hours.

According to a second aspect of the invention, there is provided a Service Control Function node for use in a communications network. The Service Control Function node is provided with a receiver for receiving a request to set up a call from a calling party, the request including information identifying the calling party. A processor is provided which compares information identifying the calling party with identities of calling parties retrieved from a remote database and provisioned in the database by a third party. On the basis of the comparison, a determination is made on whether to allow the call to be set up or whether to invoke different call handling procedures.

According to a third aspect of the invention, there is provided a database node for use in a communications network. The database node comprises a memory for storing identities of calling parties, the identities having been provisioned by a third party. A receiver is provided that can receive from a requesting node a request to interrogate the database. The request must include information identifying a calling party. A processor at the database node compares the information identifying the calling party in the request with the identities in the memory. A transmitter then sends the result of the comparison to the requesting node, which the requesting node can use to determine further call handling procedures, such as call diversion, call barring, or setting up the call.

In addition to the portion of the memory reserved for identities provision by a third party, the database node optionally further comprises a memory for storing at least one identity of a calling party specific to a single called party. This allows a subscriber to the service to have a personal "black list" of calling parties that will not apply to all subscribers of the service.

As an option, the receiver is arranged to receive a request sent from a called party to provision the memory with an identity of a new calling party. The processor handles this request and provisions the identity of the new calling party in the memory. Optionally, the identity of the calling party is only provisioned in the memory of the database node after a predetermined number of different called parties have requested the calling party identity to be provisioned the database, to prevent malicious called parties from unfairly provisioning the calling party identity in the database.

The receiver is optionally arranged to receive a request sent from a called party to provision the memory with an identity of a new called party, and the processor is arranged to, as a result of the request, provision the identity of the new called party in the memory such that it is associated with the called party. In this way, a called party can provision a calling party identity such that it only applies to the called party.

The request optionally further comprises a time stamp, and the processor is arranged to remove the request after the expiry of a predetermined time limit.

### BRIEF DESCRIPTION OF THE DRAWINGS

Figure 1 illustrates schematically in a block diagram a network architecture;
Figure 2 illustrates schematically in a block diagram a network architecture according to an embodiment of the invention;
Figure 3 is a flow diagram showing the steps according to an embodiment of the invention;
Figure 4 illustrates schematically in a block diagram a switching node according to an embodiment of the invention; and
Figure 5 illustrates schematically in a block diagram a database checking function according to an embodiment of the invention.

### DETAILED DESCRIPTION

The following description refers to a number of the called party, although it will be appreciated that any identity of the called party can be used to populate and check a database.

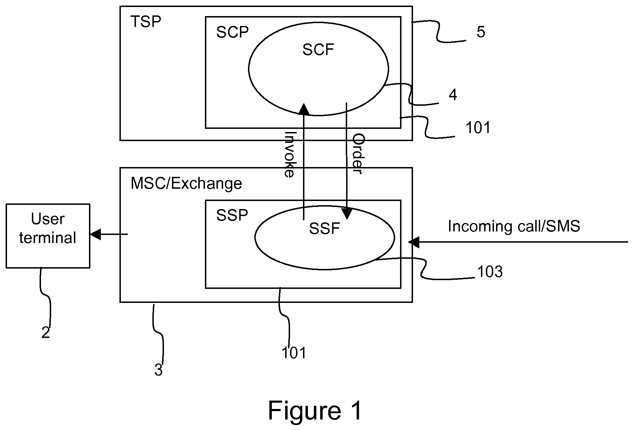

In order to better describe the invention, the system architecture for a called party is described with reference to Figure 1. A Telephony Service Processor (TSP) node 5 is a general purpose processing platform that includes a Service Control Point (SCP) 101. The SCP 101 includes a Service Control Function (SCF) 4. The called party's user terminal 2 is served by a terminating Mobile Switching Centre (MSC) 3 that is provided with a Service Switching Point (SSP) 102. The SSP 102 has a Service Switching Function (SSF) 103. When an incoming call for the called party is detected in the MSC 3, the SSF 103 invokes a service to which the called party is subscribed. The service is handled in the SCP 101.

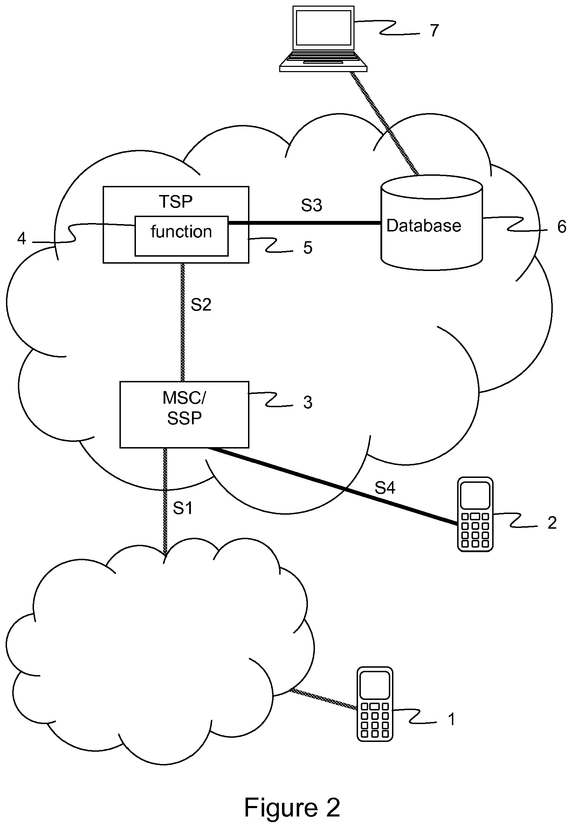

Referring to Figure 2, a calling party 1 wishes to establish a call to a called party 2 via a communications network. The called party 2 has a subscription to a service in which the called party's number is checked against a database. The called party's 2 switching centre 3invokes a database checking function on the basis of the called party's 2 subscription. A database checking function in the form of a Service Control Function 4 is provided in any suitable network node, and may be part of a TSP 5. The database checking function 4 refers to a centrally maintained database 6 and checks the number of the calling party 1 with the numbers stored in the database 6. If the calling party's 1 number is stored in the database 6, then further action can be taken, for example barring the call before the call is set up, or diverting the call, for example to a "junk" voicemail box that the called party 2 can access later, if required. An announcement may be played to the calling party 1 to inform them that the call is not being set up. On the other hand, if the calling party's 1 number is not stored in the database, then the call will be set up with the called party 2 as usual.

An incoming call for a user may invoke an incoming call handling service described above using standard service invocation methods, such as Terminating IN Category Key, or Terminating CAMEL Subscription Information, or alternative means as number range or number recognition methods. Of course, the user may also invoke the call handling service using fixed access communications, such as a telephone connected by a landline. In this case, the user can signal a request for adding a malicious calling number to the call handling service using Dual-tone multi-frequency (DTMF) signalling.

The database 6 may be provisioned in several ways. Initially, the database is provisioned with numbers provided by third parties such as Government bodies, police bodies, or telemarketers themselves. These numbers belong to telemarketers or malicious callers. If the owners of any of the numbers on the database attempt to call a person who subscribes to the service, the called person's service does not set up the call, but either bars it or handles it in a different way.

In some cases, a called party can receive a malicious call from a number that is not on the database 6. This may occur if the malicious caller is calling from a different number, or if the malicious caller is not known to the database. It would be advantageous for the called party to be able to add the malicious caller's number to the database. In this case, the called party 2 forwards the calling party's 1 number to the database 6 and the number is added to the database 6. There are several ways in which the called party 2 can forward the calling party's 1 number to the database 6. The called party's 2 number may be included in a string in an Unstructured Supplementary Service Data (USSD) that is triggered by the called party 2 and sent to the database checking function 4 or another suitable node. When the checking function 4 receives the USSD message requesting the calling party's 1 number to be included on the database, it generates a request to the database 6 to provision the calling party's 1 number. For fixed access telephones, the called party 2 can signal the service to provision the calling party's 1 number in the database using DTMF signalling.

The above request can be sent during or directly after the call. The user is not required to enter the calling party number as this is still known by the checking function as the current or last calling party identity. This is advantageous as malicious calling parties often use Calling Line Identity suppression which inhibits the display of the calling party number on the called party terminal.

Another method for the request is to send a Short Message Service (SMS) message to database checking function 4. According to this embodiment, the called party is not required to enter the calling party number as it is known by the checking function.

The checking function allows only one request for a call in progress or made. It therefore flags the calling party number after the first request so no further request can be made.

Yet another method to provision the database 6 is for the called party 2 to send a Short Message Service (SMS) message directly to the database 6, the SMS message containing the calling party's number and a request to enter their number in the database 6. A disadvantage with using SMS sent directly to the database is that a called party 2 could resend the same message many times in order to have a calling party's 1 number provisioned in the database 6 without reason or even without having called. Note that a request to provision a called party's 1 number in the database may have a limited duration in which it is valid, to ensure that requests do not remain in the system indefinitely.

Of course, a malicious called party 2 may wish to have the calling party's 1 number added to the database without reason. To address this possible abuse of the database, the database may be configured so as to only add a calling party's 1 number to the database 6 once it has received, for example, five requests for the calling party's 1 number to be added, or a lower number of requests, for example three but from three different called parties.

In one embodiment, the database is arranged to allow only one present request for provisioning a calling party's number per called party identity. The database therefore maintains a list of requests in which no double entries may exist. Any further requests for the provisioning of a certain calling party number by the same called party will be denied.

With each new entry, the database determines if the list contains further entries for the same calling party. When the number of entries found exceeds the predetermined number, the calling party number is added to the list of calling party numbers valid for all users for the service. All requests in the list having the same calling party number are then removed from the list.

In one embodiment of the invention, the database adds the calling party number directly to a personal list of the called party upon receiving a single request.

Anyone may access the database to ascertain whether their number has been incorrectly placed on the database 6, and may apply to the database 6 operator to have their number removed if it can be shown that their number should not be provisioned on the database 6. Access may be via a web-based Graphical User Interface (GUI) 7 such as an Internet browser.

The web-based GUI 7 can also be used to provision the database 6 with a malicious calling party number as an alternative to USDD, DTMF or SMS to request provision.

In one embodiment of the invention, in order to monitor operation of the database 6 and the service, a report is generated each time the service is invoked, which should at least contain the calling party number, the called party number, the data and the time.

In addition to the data stored in the database that can be applied to incoming calls to all subscribers of the service, the database may also include information relevant to each subscriber. The database therefore contains a 'global' list of calling party numbers provisioned by a third party that are checked for incoming calls to all subscribers of the service, and also a 'subscriber' list of calling party numbers that the subscriber can provision and maintain. In this way, the subscriber may, for example, have the service bar calls from a work number to the user's private number. This barring can be conditional, for example the service will allow the setup of a call from a work number to the user as long as the call is between the hours of 8am and 10pm.

The 'subscriber' list of numbers is only checked against incoming calls for that particular subscriber. The subscriber can manage their 'subscriber' list of numbers either using their mobile equipment or using the web-based GUI 7.

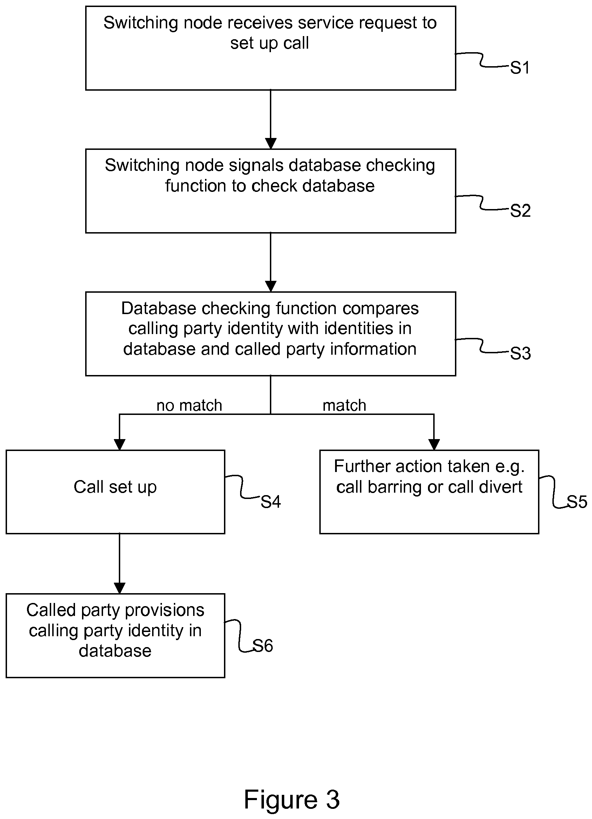

In order to summarize the steps of an embodiment of the invention, Figure 3 is a flow diagram. The following numbering corresponds to the numbering in Figure 3.

S1. The switching node 3 receives a service request to set up a call between the calling party 1 and the called party 2.

S2. The switching node 3 communicates with the database checking function 4 to check the database 6.

S3. The database checking function 4 compares the calling party identity with identities in the database 6. These identities may be global and/or specific to the called party 2.

S4. If the calling party identity does not match relevant entries in the database, then the call is set up.

S5. If the calling party identity does match a relevant entry in the database, then further action is taken, such as call barring or call diversion.

S6. If the call has been set up and the called party 2 wishes to provision the calling party's 1 identity in the database, then the called party 2 forwards the calling party's identity to the database 6 for provisioning.

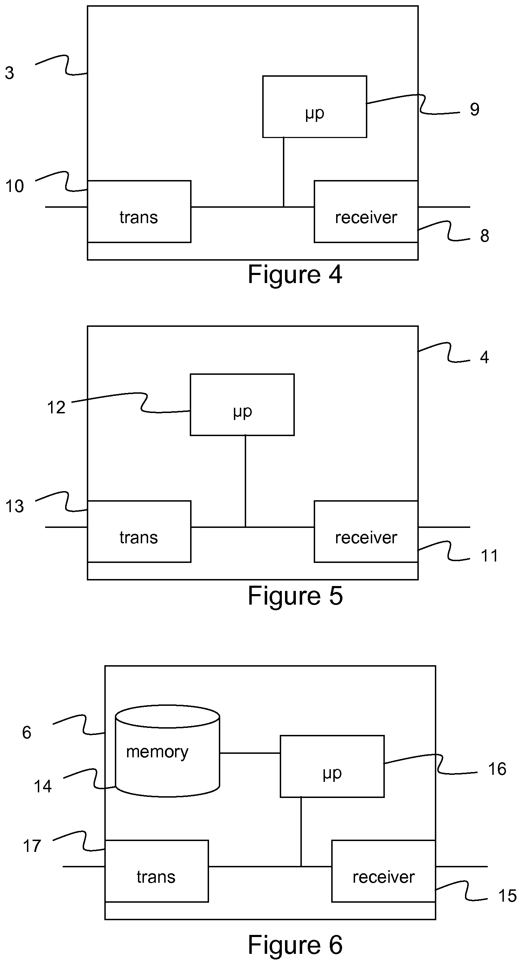

Referring now to Figure 4, there is illustrated a switching node such as a MSC or SSP according to an embodiment of the invention. The switching node 3 is provided with a receiver 8 for receiving a request to set up a call from the calling party 1. A processor 9 is also provided for determining whether or not to set up the call on the basis of a comparison of the calling party's 1 identity with identities retrieved from a remote database 7. In one embodiment, the switching node 3 also includes a transmitter 10 for sending a message to the remote database checking function 4. The message includes information identifying the called party and the calling party, and a request for the database checking function to make the comparison of information identifying the calling party with identities of calling parties retrieved from a remote database.

Figure 5 illustrates a database checking function 4 according to an embodiment of the invention. The database checking function 4 is provided with a receiver 11 for receiving a message containing information identifying a called party and a calling party from the switching node 3. A processor 12 is provided for comparing the information identifying the calling party with identities of calling parties retrieved from the remote database 6, and a transmitter 13 is also provided for sending the results of the comparison to the switching node. The database checking function 4 may be disposed in any suitable node, for example a TPS.

Figure 6 illustrates a database node 6 according to an embodiment of the invention. In this case, the database node 6 performs the check of the calling party against identities stored in the database. The database node 6 comprises a memory 14 for storing identities of calling parties. The identities are provisioned by a third party and are applied to all subscribers to the service, and the memory 14 may also include identities of calling parties specific to each subscriber, so that subscribers can maintain their own personal "black list". A receiver 15 is arranged to receive a request from a remote node to interrogate the database. A processor 16 processes the request and compared the identity of the calling party contained in the request with the identities stored in the memory 14. The results of the comparison (either a match is found or not, and may also include call handling policies) is sent using a transmitter 17 to the remote node.

The invention provides a mechanism that allows screening of unwanted calls to a user. Call numbers to be screened may apply to all users subscribing to the service, or may be specific to each subscriber. It will be apparent to a person skilled in the art that the invention can also apply to short messages services (SMS) in addition to or instead of voice calls, although in this case the SMS message is either diverted or discarded. It will be appreciated by a person of skill in the art that various modifications may be made to the above described embodiments without departing from the scope of the present invention.

## Claims

1. A method of providing a call handling service between a calling party and a called party having subscribed to said service in a communication network, the method comprising:
- at a switching node serving the called party, receiving a request to set up a call from the calling party to the called party (S1), the request including information identifying the calling party;
- invoking a database checking function for comparing the information identifying the calling party with identities in a remote database (S3);
- in the event that the information identifying the calling party matches with an identity in the remote database, taking further action determined by call handling policies (S5);
- in the event that the information identifying the calling party does not match identities in the remote database, setting up the call (S4), and when a request to provision the calling party identity in the data base is received from the called party, forwarding the calling party identity to the database for provisioning specific to the called party (S6); **characterized in that** the method further comprises
- at the database, when the number of requests for provisioning exceeds a predetermined number, provision the calling party identity as valid for all subscribers of said service.

2. The method according to claim 1, wherein the database comprises identities of calling parties associated specific to a single called party and or globally to all subscribers to said service.

3. The method of claim 1, wherein the database further comprises identities of calling parties, provisioned by a third party, valid for all subscribers to said service.

4. The method of claim 1, wherein a called party can only make one request for provisioning per call.

5. The method of claim 1, wherein the database allows only one request for provisioning per combination of calling and called party.

6. The method according to claim 1, wherein the switching node is any one of a Mobile Switching Centre, telephone exchange, and a node performing a telephony switching function, and the switching node is equipped with a Service Switching Point.

7. The method according to claim 1, wherein the database checking function is a Service Control Function.

8. The method according to any one of claims 1, wherein the further action is selected from one of barring the call and diverting the call.

9. The method according to claim 1 or 7, wherein the further action comprises playing an announcement to the calling party.

10. The method according to any one of claims 1, further comprising:
- receiving subscriber specific information from the database relating to the calling party identity, and determining whether to set up the call or take further action determined by call handling policies as a result of the subscriber specific information.

11. The method of claim 1, where the predetermined number has a first value for a number of requests to provision the calling party by the single calling party and a second value for a number of different called parties having made a request for provisioning the calling party.

12. A database node (6) accessible by a call handling service in a communications network, the database node comprising:
- a memory (14) for storing identities of calling parties;
- a receiver (15) for receiving from a requesting node a request to interrogate the database on behalf of the call handling service, the request including information identifying a calling party;
- a processor (16) for comparing the information identifying a calling party in the request to interrogate with the identities in the memory;
- a transmitter (17) for sending the results of the comparison to the requesting node for use by the requesting node to determine further call handling procedures;
- Wherein the receiver is arranged to receive a request to provision from a called party to provision the identity of a calling party in the memory;
- Wherein the processor is arranged to, provision the identity of the calling party in the memory;
- **characterized in that** the processor is arranged to provision the identity of the calling party as valid for all subscribers of said service when a number of requests to provision exceeds a predetermined number.

13. The database node according to claim 12, further comprising a memory for storing identities of calling parties associated specific to a single called party and or globally to all subscribers to said service.

14. The database node according to claim 12, wherein the processor is arranged to use a first value for said number of requests to provision the calling party made by the single called party and a second value for a number of different called parties having made a request to provision the calling party.

15. The database node according to claim 12, wherein the database allows only one request for provisioning per combination of calling and called party.

16. The database node according to claims 12, wherein the request further comprises a time stamp and the processor is arranged to remove the request after the expiry of a predetermined time limit.

## Patentansprüche

1. Verfahren zum Bereitstellen eines Anrufbearbeitungsdiensts zwischen einem anrufenden Teilnehmer und einem angerufenen Teilnehmer, die den Dienst in einem Kommunikationsnetz abonniert haben, wobei das Verfahren Folgendes umfasst:
an einem Vermittlungsknoten, der den angerufenen Teilnehmer bedient, Empfangen einer Anfrage, einen Anruf von dem anrufenden Teilnehmer an den angerufenen Teilnehmer einzurichten (S1), wobei die Anfrage Informationen enthält, die den anrufenden Teilnehmer identifizieren;
Aufrufen einer Datenbanküberprüfungsfunktion zum Vergleichen der Informationen, die den anrufenden Teilnehmer identifizieren, mit Identitäten in einer Ferndatenbank (S3);
im Falle, dass die Informationen, die den anrufenden Teilnehmer identifizieren, mit einer Identität in der Ferndatenbank übereinstimmen, Ergreifen weiterer Maßnahmen, die von Anrufbearbeitungsrichtlinien bestimmt werden (S5);
im Falle, dass die Informationen, die den anrufenden Teilnehmer identifizieren, nicht mit Identitäten in der Ferndatenbank übereinstimmen, Aufbauen des Anrufs (S4), und wenn eine Anfrage zum Festlegen der Identität des anrufenden Teilnehmers in der Datenbank von dem angerufenen Teilnehmer empfangen wird, Weiterleiten der Identität des anrufenden Teilnehmers an die Datenbank zum Festlegen spezifisch zu den angerufenen Teilnehmer (S6);
**dadurch gekennzeichnet, dass** das Verfahren ferner Folgendes umfasst
in der Datenbank, wenn die Zahl der Anfragen zum Festlegen eine vorbestimmte Zahl überschreitet, Festlegen der Identität des anrufenden Teilnehmers als gültig für alle Abonnenten des Diensts.

2. Verfahren nach Anspruch 1, wobei die Datenbank Identitäten von anrufenden Teilnehmern umfasst, die spezifisch einem einzelnen angerufenen Teilnehmer und/oder generell allen Abonnenten des Diensts zugeordnet sind.

3. Verfahren nach Anspruch 1, wobei die Datenbank ferner Identitäten von anrufenden Teilnehmern umfasst, die von einem dritten Teilnehmer bestimmt sind, die für alle Abonnenten des Diensts gültig sind.

4. Verfahren nach Anspruch 1, wobei ein angerufener Teilnehmer pro Anruf nur eine Anfrage zum Festlegen stellen kann.

5. Verfahren nach Anspruch 1, wobei die Datenbank nur eine Anfrage zum Festlegen je Kombination von anrufendem und angerufenem Teilnehmer zulässt.

6. Verfahren nach Anspruch 1, wobei der Vermittlungsknoten eines von einer Mobilvermittlungsstelle, einer Telefonvermittlung und einem Knoten ist, der eine Telefonieschaltfunktion durchführt, und der Vermittlungsknoten mit einem Dienstevermittlungspunkt ausgestattet ist.

7. Verfahren nach Anspruch 1, wobei die Datenbanküberprüfungsfunktion eine Dienstkontrollfunktion ist.

8. Verfahren nach Anspruch 1, wobei die weitere Maßnahme aus einem von Sperren des Anrufs und Umleiten des Anrufs ausgewählt wird.

9. Verfahren nach Anspruch 1 oder 7, wobei die weitere Maßnahme das Abspielen einer Ansage an den anrufenden Teilnehmer umfasst.

10. Verfahren nach Anspruch 1, ferner umfassend:
Empfangen abonnentenspezifischer Informationen von der Datenbank in Zusammenhang mit der Identität des anrufenden Teilnehmers und Bestimmen, ob der Anruf eingerichtet wird oder weitere Maßnahmen ergriffen werden, die von Anrufbearbeitungsrichtlinien auf Grundlage von abonnentenspezifischen Informationen bestimmt werden.

11. Verfahren nach Anspruch 1, wobei die vorbestimmte Zahl einen ersten Wert für eine Zahl von Anfragen hat, den anrufenden Teilnehmer von dem einzelnen anrufenden Teilnehmer zum Festlegen, und einen zweiten Wert für eine Zahl verschiedener angerufener Teilnehmer, die eine Anfrage zum Festlegen des anrufenden Teilnehmers gemacht haben.

12. Datenbankknoten (6), der von einem Anrufbearbeitungsdienst in einem Kommunikationsnetzwerk zugänglich ist, wobei der Datenbankknoten Folgendes umfasst:
einen Speicher (14) zum Speichern der Identitäten von anrufenden Teilnehmern;
einen Empfänger (15) zum Empfangen einer Anfrage von einem anfordernden Knoten, um die Datenbank im Namen des Anrufbearbeitungsdiensts zu befragen, wobei die Anfrage Informationen enthält, die einen anrufenden Teilnehmer identifizieren;
einen Prozessor (16) zum Vergleichen der Informationen, die einen anrufenden Teilnehmer in der Anfrage, die Identitäten in dem Speicher zu befragen, identifizieren;
einen Sender (17) zum Senden der Ergebnisse des Vergleichs an den anfordernden Knoten zur Verwendung durch den anfragenden Knoten, um weitere Anrufbearbeitungsverfahren zu bestimmen;
wobei der Empfänger eingerichtet ist, eine Anfrage zum Festlegen von einem angerufenen Teilnehmer zu erhalten, um die Identität eines anrufenden Teilnehmers in dem Speicher Fest zu legen;
wobei der Prozessor eingerichtet ist, um die Identität des anrufenden Teilnehmers in dem Speicher fest zu legen;
**dadurch gekennzeichnet, dass** der Prozessor eingerichtet ist, um die Identität des anrufenden Teilnehmers als für alle Abonnenten des Diensts gültig zu bestimmen, wenn eine Zahl von Anfragen zum Festlegen eine vorbestimmte Zahl überschreitet.

13. Datenbankknoten nach Anspruch 12, ferner umfassend einen Speicher zum Speichern von Identitäten von anrufenden Teilnehmern, die spezifisch einem einzelnen angerufenen Teilnehmer und/oder generell allen Abonnenten des Diensts zugeordnet sind.

14. Datenbankknoten nach Anspruch 12, wobei der Prozessor eingerichtet ist, um einen ersten Wert für die Zahl von Anfragen, den anrufenden Teilnehmer fest zu legen, die von dem einzelnen angerufenen Teilnehmer gestellt werden, und einen zweiten Wert für eine Zahl verschiedener angerufener Teilnehmer zu verwenden, die eine Anfrage gestellt haben, den anrufenden Teilnehmer fest zu legen.

15. Datenbankknoten nach Anspruch 12, wobei die Datenbank nur eine Anfrage zum Festlegen je Kombination von anrufendem und angerufenem Teilnehmer zulässt.

16. Datenbankknoten nach Anspruch 12, wobei die Anfrage ferner einen Zeitstempel umfasst und der Prozessor angeordnet ist, die Anfrage nach dem Ablauf eines vorbestimmten Zeitraums zu entfernen.

## Revendications

1. Procédé de fourniture d'un service de gestion d'appel entre un appelant et un appelé qui se sont abonnés audit service dans un réseau de communication, le procédé comprenant :
- au niveau d'un noeud de commutation desservant l'appelé, la réception d'une demande d'établissement d'un appel de l'appelant à l'appelé (S1), la demande comprenant des informations identifiant l'appelant ;
- l'appel d'une fonction de vérification de base de données pour comparer les informations identifiant l'appelant avec des identités dans une base de données à distance (S3) ;
- dans le cas où les informations identifiant l'appelant correspondent à une identité dans la base de données à distance, la prise d'autres mesures déterminées par des politiques de gestion d'appel (S5) ;
- dans le cas où les informations identifiant l'appelant ne correspondent pas à des identités dans la base de données à distance, l'établissement de l'appel (S4), et quand une demande pour mettre à disposition l'identité d'appelant dans la base de données est reçue à partir de l'appelé, la transmission de l'identité d'appelant à la base de données pour une mise à disposition spécifique à l'appelé (S6) ;
**caractérisé en ce que** le procédé comprend en outre
- au niveau de la base de données, quand le nombre de demandes de mise à disposition dépasse un nombre prédéterminé, la mise à disposition de l'identité d'appelant comme valide pour tous les abonnés audit service.

2. Procédé selon la revendication 1, dans lequel la base de données comprend des identités d'appelants associés spécifiquement à un unique appelé et ou globalement à tous les abonnés audit service.

3. Procédé selon la revendication 1, dans lequel la base de données comprend en outre des identités d'appelants, mises à disposition par un tiers, valides pour tous les abonnés audit service.

4. Procédé selon la revendication 1, dans lequel un appelé peut effectuer seulement une demande de mise à disposition par appel.

5. Procédé selon la revendication 1, dans lequel la base de données permet une seule demande de mise à disposition par combinaison d'appelant et d'appelé.

6. Procédé selon la revendication 1, dans lequel le noeud de commutation est l'un quelconque parmi un centre de commutation mobile, un central téléphonique et un noeud effectuant une fonction de commutation de téléphonie, et le noeud de commutation est équipé d'un point de commutation de services.

7. Procédé selon la revendication 1, dans lequel la fonction de vérification de base de données est une fonction de commande de services.

8. Procédé selon la revendication 1, dans lequel les autres mesures sont sélectionnées entre l'un d'un blocage de l'appel et d'un détournement de l'appel.

9. Procédé selon la revendication 1 ou 7, dans lequel les autres mesures comprennent la reproduction d'une annonce à l'appelant.

10. Procédé selon l'une quelconque des revendications 1, comprenant en outre :
- la réception d'informations spécifiques à l'abonné à partir de la base de données concernant l'identité d'appelant, et la détermination du fait d'établir l'appel ou de prendre d'autres mesures déterminées par des politiques de gestion d'appel en conséquence des informations spécifiques à l'abonné.

11. Procédé selon la revendication 1, dans lequel le nombre prédéterminé a une première valeur pour un nombre de demandes de mise à disposition de l'appelant par l'appelant individuel et une deuxième valeur pour un nombre de différents appelés ayant effectué une demande de mise à disposition de l'appelant.

12. Noeud de base de données (6) accessible par un service de gestion d'appel dans un réseau de communication, le noeud de base de données comprenant :
- une mémoire (14) pour stocker des identités d'appelants ;
- un récepteur (15) pour recevoir à partir d'un noeud demandeur une demande d'interrogation de la base de données pour le compte du service de gestion d'appel, la demande comprenant des informations identifiant un appelant ;
- un processeur (16) pour comparer les informations identifiant un appelant dans la demande d'interrogation avec les identités dans la mémoire ;
- un émetteur (17) pour envoyer les résultats de la comparaison au noeud demandeur pour l'utilisation par le noeud demandeur pour déterminer d'autres procédures de gestion d'appel ;
- dans lequel le récepteur est agencé pour recevoir une demande de mise à disposition provenant d'un appelé pour mettre à disposition l'identité d'un appelant dans la mémoire ;
- dans lequel le processeur est agencé pour mettre à disposition l'identité de l'appelant dans la mémoire ;
- **caractérisé en ce que** le processeur est agencé pour mettre à disposition l'identité de l'appelant comme valide pour tous les abonnés audit service quand un nombre de demandes de mise à disposition dépasse un nombre prédéterminé.

13. Noeud de base de données selon la revendication 12, comprenant en outre une mémoire pour stocker des identités d'appelants associés spécifiquement à un unique appelé et ou globalement à tous les abonnés audit service.

14. Noeud de base de données selon la revendication 12, dans lequel le processeur est agencé pour utiliser une première valeur pour ledit nombre de demandes de mise à disposition de l'appelant effectuées par l'appelé individuel et une deuxième valeur pour un nombre de différents appelés ayant effectué une demande de mise à disposition de l'appelant.

15. Noeud de base de données selon la revendication 12, dans lequel la base de données permet une seule demande de mise à disposition par combinaison d'appelant et d'appelé.

16. Noeud de base de données selon la revendication 12, dans lequel la demande comprend en outre un horodatage et le processeur est agencé pour retirer la demande après l'expiration d'une limite de temps prédéterminée.
